# EUROPEAN PATENT APPLICATION

(11) **EP 4 803 759 A1**
(43) Date of publication of application: **09.09.2026**
(21) Application number: 24885333.5
(22) Date of filing: 30.09.2024
(51) Int. Cl.: F15B 11/00, F15B 11/02, F16K 27/00

(54) **INLET HOUSING**

(30) Priority: 30.10.2023 JP 2023185293
(71) Applicant: KYB Corporation, Minato-ku, Tokyo 105-5128 (JP)
(72) Inventor: FUKUSHIMA, Ryo, Tokyo 105-5128 (JP)
(74) Representative: Grünecker Patent- und Rechtsanwälte PartG mbB
(86) International application number: PCT/JP2024/034881
(87) International publication number: WO 2025/094556

(57) **Abstract**

In the inlet housing 1, the inlet port 11 and the internal flow passage 12 are provided between the left-side traveling control valve 4 and the right-side traveling control valve 5. The inlet port 11 is, between the respective pairs of traveling supply-and-discharge ports 67 and 68 of the left-side traveling control valve 4 and the right-side traveling control valve 5, offset with respect to the imaginary line L1 passing through the respective first traveling supply-and-discharge ports 67 arranged on the same side and with respect to the imaginary line L2 passing through the respective second traveling supply-and-discharge ports 68; and the distance D1 between the pair of traveling supply-and-discharge ports 67 and 68 of the left-side traveling control valve 4 and the pair of traveling supply-and-discharge ports 67 and 68 of the right-side traveling control valve 5 is shorter than the diameter D2 of the inlet port 11.

## Description

### TECHNICAL FIELD

The present invention relates to an inlet housing.

### BACKGROUND ART

JP2003-227503A discloses a hydraulic circuit structure that includes an end block to which discharged oil from a main pump is supplied via a pressurized oil supplying oil passage, a right traveling control valve, and a left traveling control valve. In the hydraulic circuit structure, the end block, the right traveling control valve, and the left traveling control valve are arranged side by side in this order.

### SUMMARY OF INVENTION

In the hydraulic circuit structure, due to a difference between an oil passage length from the end block to the right traveling control valve and an oil passage length from the end block to the left traveling control valve, a left-right traveling difference is caused, and it is possible that the straight travel performance is influenced. In addition, a width of a housing may be determined by the size of ports in each of the end block, the right traveling control valve, and the left traveling control valve, and thus, downsizing may be restricted.

The present invention has been made in view of such a problem, and an object thereof is to suppress an occurrence of left-right traveling difference while achieving downsizing.

According to one aspect of the present invention, an inlet housing to which working fluid is supplied from a fluid pressure source, the inlet housing includes: a left-side traveling control valve incorporated inside the inlet housing, the left-side traveling control valve being configured to control a left-side traveling motor; a right-side traveling control valve incorporated inside the inlet housing, the right-side traveling control valve being configured to control a right-side traveling motor; an inlet port communicated with the fluid pressure source by opening at an outer surface of the inlet housing; and an internal flow passage communicated with the inlet port and connected to a pump passage, the pump passage being configured to guide the working fluid to the left-side traveling control valve and the right-side traveling control valve, wherein the left-side traveling control valve has a pair of left-side traveling supply-and-discharge ports, the pair of left-side traveling supply-and-discharge ports opening at the outer surface and being configured to supply and discharge the working fluid to and from the left-side traveling motor, the right-side traveling control valve has a pair of right-side traveling supply-and-discharge ports, the pair of right-side traveling supply-and-discharge ports opening at the outer surface and being configured to supply and discharge the working fluid to and from the right-side traveling motor, the inlet port and the internal flow passage are provided between the left-side traveling control valve and the right-side traveling control valve, the inlet port is offset with respect to each of imaginary lines passing through two supply and discharge port rows configured by the left-side traveling supply-and-discharge ports and the right-side traveling supply-and-discharge ports arranged on the same side in the left-side traveling control valve and the right-side traveling control valve, and a distance between the pair of left-side traveling supply-and-discharge ports and the pair of right-side traveling supply-and-discharge ports is shorter than a diameter of the inlet port.

### BRIEF DESCRIPTION OF DRAWINGS

[FIG. 1] FIG. 1 is a schematic configuration diagram of a fluid pressure control device according to an embodiment of the present invention.
[FIG. 2] FIG. 2 is a sectional view corresponding to a cross-section taken along AA-AA or a cross-section taken along AB-AB in FIG. 1.
[FIG. 3] FIG. 3 is a diagram showing an inlet housing in a cross-section taken along B-B shown in FIG. 1.

### DESCRIPTION OF EMBODIMENTS

An embodiment of the present invention will be described below with reference to the attached drawings.

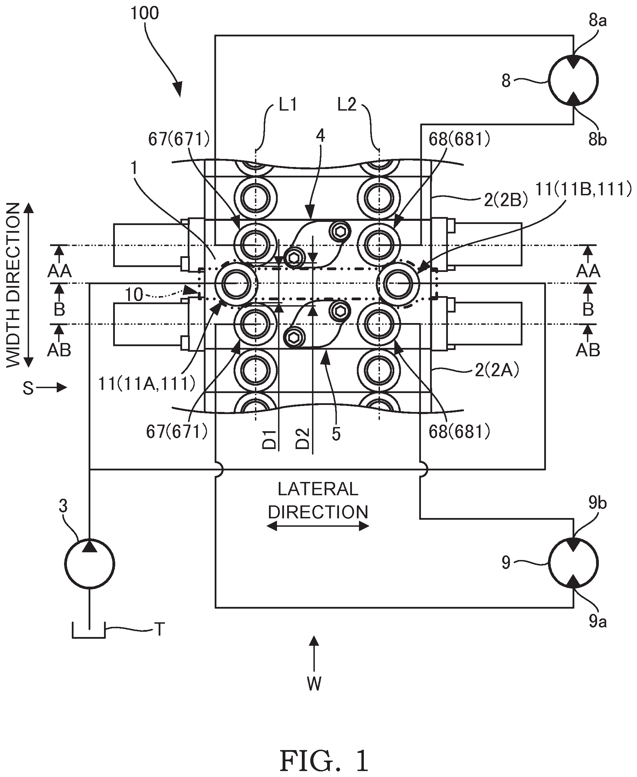

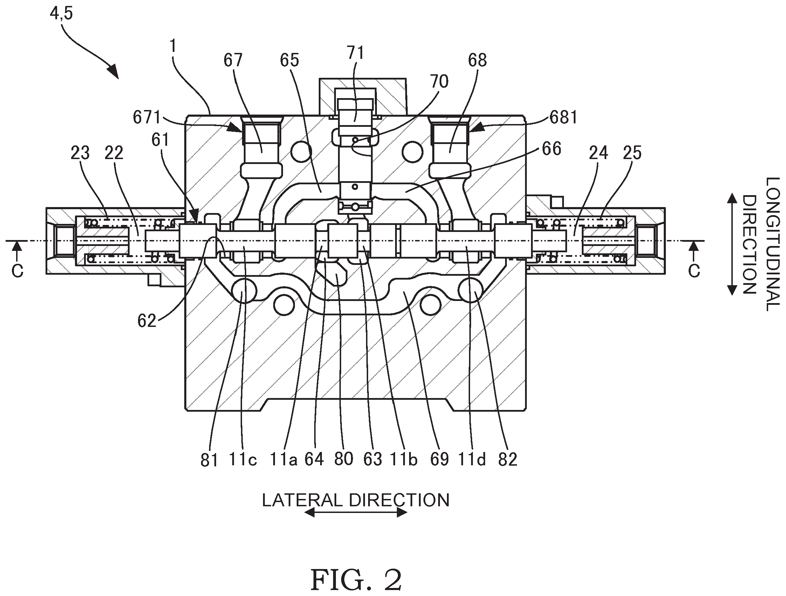

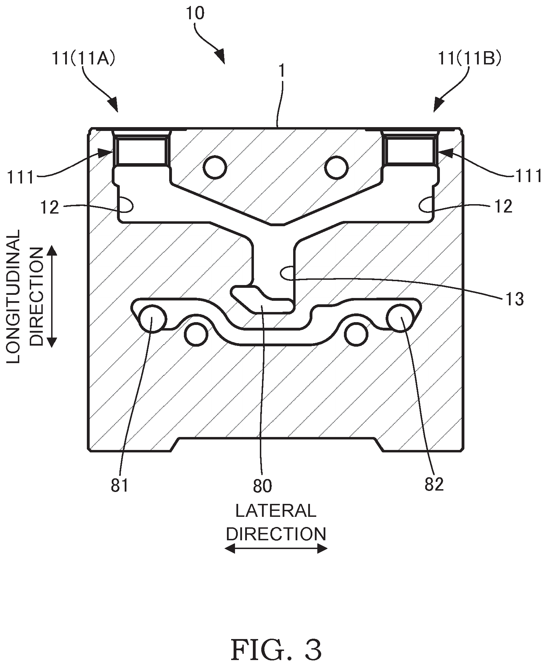

FIG. 1 is a schematic configuration diagram of a fluid pressure control device 100. FIG. 2 is a sectional view corresponding to a cross-section taken along AA-AA and a cross-section taken along AB-AB that is similar to the cross-section taken along AA-AA in FIG. 1. FIG. 3 is a view showing an inlet housing 1 in a cross-section taken along B-B shown in FIG. 1.

The fluid pressure control device 100 shown in FIG. 1 is mounted on a construction machine (for example, a hydraulic excavator) as a vehicle having hydraulic traveling drive sources on the left and right sides, and controls operation of actuators such as a left-side traveling motor 8 and a right-side traveling motor 9, which will be described later, a hydraulic cylinder (not shown), and so forth by controlling supply and discharge of working oil to and from the actuators.

The fluid pressure control device 100 includes the inlet housing 1 and a plurality of valve housings 2. The hydraulic cylinder (not shown), for example, is connected to each of the plurality of valve housings 2 via oil passages. The hydraulic cylinder drives a drive target (not shown) such as a boom, an arm, and a bucket of a hydraulic excavator, for example. The working oil corresponds to a working fluid. An incompressible fluid such as water, etc. may be used as the working fluid in addition to the working oil. In FIG. 1, a valve housing 2A and a valve housing 2B are illustrated as the plurality of valve housings 2. The plurality of valve housings 2 and the inlet housing 1 are connected to form an integral valve block, thereby forming the fluid pressure control device 100.

The inlet housing 1 is a single housing to which the working oil is supplied from outside of the fluid pressure control device 100, and has two inlet ports 11 formed in the inlet housing 1. The two inlet ports 11 are arranged side by side in the lateral direction such that the center positions in the width direction are the same with each other, and each of the inlet ports 11 has an installation portion 111 which includes a counter bore portion and a female threaded portion and to which a joint (not shown) is assembled.

Each of the inlet ports 11 opens at an upper surface of the inlet housing 1 with the installation portion 111. The two inlet ports 11 may open at an outer surface other than the upper surface of the inlet housing 1, and may not be provided on the same surface. The same applies to a positional relationship between traveling supply-and-discharge ports 67 and 68, which will be described later, and between the inlet ports 11 and the traveling supply-and-discharge ports 67 and 68. The traveling supply-and-discharge ports 67 and 68 also have installation portions 671 and 681 similarly to those of the inlet ports 11. In the following, a first one of the two inlet ports 11 (the inlet port 11 that is located on the left side in FIG. 1) is also referred to as an inlet port 11A, and a second one of the inlet ports 11 (the inlet port 11 that is located on the right side in FIG. 1) is also referred to as an inlet port 11B.

The working oil is supplied to the fluid pressure control device 100 through each of the inlet ports 11 by a pump 3 serving as a fluid pressure source. Oil passages (piping) are branched and connected from a common pump 3 to each of the inlet ports 11. The oil passages (the piping) from the common pump 3 may be connected to each of the inlet ports 11 by being branched by a joint. In addition, separate pumps may be provided for each of the inlet ports 11. The working oil that has been supplied into the inlet housing 1 is then supplied to each of the valve housings 2 via oil passages formed in the valve block. A control valve is provided in each of the valve housings 2, and control of the working oil supplied to and discharged from a corresponding hydraulic cylinder is performed by the control valve.

As shown in FIGs. 1 and 2, the inlet housing 1 further has a left-side traveling control valve 4 that is located at the position shown in the cross-section taken along AA-AA in FIG. 1, and has a right-side traveling control valve 5 that is located at the position shown in the cross-section taken along AB-AB. The left-side traveling control valve 4 and the right-side traveling control valve 5 are incorporated inside the inlet housing 1 and are arranged side by side in the width direction. Therefore, in other words, the width direction can be said to be the direction in which the left-side traveling control valve 4 and the right-side traveling control valve 5 are arranged side by side. In the following, the left-side traveling control valve 4 will be mainly described as an example, but the same applies to the right-side traveling control valve 5.

The left-side traveling control valve 4 has a spool valve 61 whose position is switched between a plurality of switching positions, and an accommodation hole 62 that slidably accommodates the spool valve 61. The left-side traveling control valve 4 has three switching positions as the plurality of switching positions: a neutral position, a normal rotation position, and a reverse rotation position. In FIG. 2, the spool valve 61 is positioned at the neutral position.

The accommodation hole 62 is formed with: an annular recessed portion 63 that is provided at the center; a pump port 64 that is provided adjacent to the annular recessed portion 63; supply ports 65 and 66 that are respectively provided at the outer sides of the annular recessed portion 63 and the pump port 64; the pair of traveling supply-and-discharge ports 67 and 68 that are respectively provided at the outer sides of the supply ports 65 and 66 and that open at the upper surface of the inlet housing 1; and a discharge port 69 that is provided at the outer sides of the pair of traveling supply-and-discharge ports 67 and 68.

The pump port 64 is connected to the pump 3 (see FIG. 1) through a pump passage 80 that extends in the width direction (in the vertical direction in FIG. 1) of the inlet housing 1. The working oil discharged from the pump 3 is constantly guided to the pump port 64. The pair of traveling supply-and-discharge ports 67 and 68 are connected to the left-side traveling motor 8 (see FIG. 1), and the discharge port 69 is connected to a tank T (see FIG. 1) through tank passages 81 and 82 that extend in the width direction. Note that, in a case of the right-side traveling control valve 5 that is located at the position shown in the cross-section taken along AB-AB shown in FIG. 1, the pair of traveling supply-and-discharge ports 67 and 68 are connected to the right-side traveling motor 9. Both the left-side traveling motor 8 and the right-side traveling motor 9 are hydraulic motors, and form the traveling drive sources that are operated by the hydraulic pressure.

In the left-side traveling control valve 4 that is located at the position shown in the cross-section taken along AA-AA shown in FIG. 1, the first traveling supply-and-discharge port 67 of the pair of traveling supply-and-discharge ports 67 and 68 is connected to a first port 8a of the left-side traveling motor 8, and the second traveling supply-and-discharge port 68 is connected to a second port 8b of the left-side traveling motor 8. In addition, in the right-side traveling control valve 5 that is located at the position shown in the cross-section taken along AB-AB, the first traveling supply-and-discharge port 67 is connected to a first port 9a of the right-side traveling motor 9, and the second traveling supply-and-discharge port 68 is connected to a second port 9b of the right-side traveling motor 9. The pair of traveling supply-and-discharge ports 67 and 68 are arranged side by side in the lateral direction so that the center positions in the width direction are the same with each other, and they form the pair in the lateral direction (in the left-right direction in FIG. 1) of the inlet housing 1. Therefore, in other words, the lateral direction can be said to be the direction in which the pair of traveling supply-and-discharge ports 67 and 68 are arranged or the direction in which they form the pair.

As shown in FIG. 2, the left-side traveling control valve 4 further has: a valve accommodation hole 70 that is formed orthogonally to the accommodation hole 62; and a compensator valve 71 that is slidably accommodated in the valve accommodation hole 70. The annular recessed portion 63 and the supply ports 65 and 66 are communicated with each other through the compensator valve 71, and an opening degree through which these are communicated changes according to a pressure of the working oil acting on the compensator valve 71.

The spool valve 61 has, in a state in which it is positioned at the neutral position: a first annular groove 11a that is formed at a position facing the pump port 64; a second annular groove 11b that is formed at a position facing the annular recessed portion 63; a third annular groove 11c that is formed at a position facing the first traveling supply-and-discharge port 67; and a fourth annular groove 11d that is formed at a position facing the second traveling supply-and-discharge port 68. In addition, a first pilot chamber 22 and a centering spring 23 are provided at one end of the spool valve 61, and a second pilot chamber 24 and a centering spring 25 are provided at the other end of the spool valve 61.

When a pilot pressure is guided into the first pilot chamber 22 and the spool valve 61 is moved to the normal rotation position on the right side in the lateral direction, the pump port 64 and the annular recessed portion 63 are communicated with each other through the first annular groove 11a and a notch (not shown) that communicates with the first annular groove 11a, and the working oil is guided to the supply ports 65 and 66. The working oil that has been guided to the supply port 65 then passes through the first traveling supply-and-discharge port 67, which is communicated with the supply port 65 via the third annular groove 11c, and flows towards the first port 8a of the left-side traveling motor 8 (see FIG. 1). The working oil supplied to the left-side traveling motor 8 is then guided from the second port 8b to the second traveling supply-and-discharge port 68, and is discharged to the tank T (see FIG. 1) through the discharge port 69, which is communicated with the second traveling supply-and-discharge port 68 via the fourth annular groove 11d, and the tank passages 81 and 82.

When a pilot pressure is guided into the second pilot chamber 24 and the spool valve 61 is moved to the reverse rotation position on the left side in the lateral direction, the pump port 64 and the annular recessed portion 63 are communicated with each other through the second annular groove 11b and a notch (not shown) that communicates with the second annular groove 11b, and the working oil is guided to the supply ports 65 and 66. The working oil that has been guided to the supply port 66 then passes through the second traveling supply-and-discharge port 68, which is communicated with the supply port 66 via the fourth annular groove 11d, and flows towards the second port 8b of the left-side traveling motor 8 (see FIG. 1). The working oil supplied to the left-side traveling motor 8 is then guided from the first port 8a to the first traveling supply-and-discharge port 67, and is discharged to the tank T (see FIG. 1) through the discharge port 69, which is communicated with the first traveling supply-and-discharge port 67 via the third annular groove 11c, and the tank passages 81 and 82.

Therefore, the pair of traveling supply-and-discharge ports 67 and 68 supply and discharge the working oil to and from the left-side traveling motor 8 according to the switching position of the spool valve 61. In a case of the right-side traveling control valve 5, the pair of traveling supply-and-discharge ports 67 and 68 supply and discharge the working oil to and from the right-side traveling motor 9. The pair of traveling supply-and-discharge ports 67 and 68 of the left-side traveling control valve 4 correspond to left-side traveling supply-and-discharge ports, and the pair of traveling supply-and-discharge ports 67 and 68 of the right-side traveling control valve 5 correspond to right-side traveling supply-and-discharge ports.

When forward traveling is to be performed, both of the left-side traveling control valve 4 and the right-side traveling control valve 5 are switched to the normal rotation position (the right side in FIG. 2). As a result, the working oil is supplied to the first port 8a of the left-side traveling motor 8 through the left-side traveling control valve 4 and to the first port 9a of the right-side traveling motor 9 through the right-side traveling control valve 5, and both of the left-side traveling motor 8 and the right-side traveling motor 9 are driven in the normal rotation direction.

When reverse traveling is to be performed, both of the left-side traveling control valve 4 and the right-side traveling control valve 5 are switched to the reverse rotation position (the left side in FIG. 2). As a result, the working oil is supplied to the second port 8b of the left-side traveling motor 8 through the left-side traveling control valve 4 and to the second port 9b of the right-side traveling motor 9 through the right-side traveling control valve 5, and both of the left-side traveling motor 8 and the right-side traveling motor 9 are driven in the reverse rotation direction.

As shown in FIGs. 1 and 3, the inlet housing 1 has an inlet portion 10 that is provided between the left-side traveling control valve 4 and the right-side traveling control valve 5. The inlet portion 10 is a portion sandwiched between the left-side traveling control valve 4 and the right-side traveling control valve 5 in the width direction of the inlet housing 1, and as shown in FIG. 3, in the inlet portion 10, in addition to the two inlet ports 11, two internal flow passages 12 that are respectively connected to the two inlet ports 11 and a junction portion 13 at which the two internal flow passages 12 are merged are formed. The installation portions 111 of the inlet ports 11 are formed in the inlet portion 10.

In addition, the pump passage 80 and the tank passages 81 and 82 are also formed in the inlet portion 10. The pump passage 80 and the tank passages 81 and 82 are formed as flow passages that extend over the left-side traveling control valve 4, the inlet portion 10, and the right-side traveling control valve 5 by penetrating the inlet housing 1 in the width direction.

The junction portion 13 communicates with the pump passage 80 at an end portion on the side (the lower side in FIG. 3) opposite to the side where the two internal flow passages 12 are merged. Therefore, the working oil discharged from the pump 3 is supplied into the inlet housing 1 from each of the inlet ports 11, and then is supplied to the left-side traveling control valve 4 and the right-side traveling control valve 5, and further to each of the valve housings 2 (see FIG. 1) through each of the internal flow passages 12, the junction portion 13, and the portion of the pump passage 80 that is formed in the inlet portion 10.

As described above, each of the internal flow passages 12 communicates with the inlet port 11 and communicates (is connected) with the pump passage 80, and guides the working oil to the left-side traveling control valve 4 and the right-side traveling control valve 5 through the pump passage 80. The internal flow passages 12 are continuous with the inlet ports 11 in a respective manner and are provided in the inlet portion 10 together with the inlet ports 11, and so, the internal flow passages 12 are provided together with the inlet ports 11 between the left-side traveling control valve 4 and the right-side traveling control valve 5.

In the inlet housing 1 configured as described above, as shown in FIG. 1, the respective first traveling supply-and-discharge ports 67 of the left-side traveling control valve 4 and the right-side traveling control valve 5 are arranged on the same side (the left side in FIG. 1) in the left-side traveling control valve 4 and the right-side traveling control valve 5. Similarly, the respective second traveling supply-and-discharge ports 68 of the left-side traveling control valve 4 and the right-side traveling control valve 5 are also arranged on the same side (the right side in FIG. 1) in the left-side traveling control valve 4 and the right-side traveling control valve 5. The respective first traveling supply-and-discharge ports 67 are arranged on the same side in the lateral direction, and are arranged side by side in the width direction such that the center positions in the lateral direction are the same with each other. The same applies to the second traveling supply-and-discharge ports 68.

The inlet port 11A is provided between respective pairs of traveling supply-and-discharge ports 67 and 68 of the left-side traveling control valve 4 and the right-side traveling control valve 5 so as to be offset with respect to an imaginary line L1 that passes through the respective first traveling supply-and-discharge ports 67, which are arranged on the same side. In addition, the inlet port 11B is provided between the respective pairs of traveling supply-and-discharge ports 67 and 68 of the left-side traveling control valve 4 and the right-side traveling control valve 5 so as to be offset with respect to an imaginary line L2 that passes through the respective second traveling supply-and-discharge ports 68, which are arranged on the same side. The inlet port 11A is also provided so as to be offset with respect to the imaginary line L2, and the inlet port 11B is also provided so as to be offset with respect to the imaginary line L1. Both of the inlet port 11A and the inlet port 11B are offset in the lateral direction with respect to the imaginary lines L1 and L2, respectively. The inlet port 11A and the inlet port 11B are provided so as to be offset to the outer side of the imaginary line L1 and the imaginary line L2, respectively. The inlet port 11A and the inlet port 11B may be provided so as to be offset to the inner side of the imaginary line L1 and the imaginary line L2, respectively.

The imaginary line L1 passes through the centers of the respective traveling supply-and-discharge ports 67, and the imaginary line L2 passes through the centers of the respective traveling supply-and-discharge ports 68. Therefore, the inlet port 11A is provided so as to be offset with respect to the imaginary line L1 serving as a center line that passes through the centers of the respective first traveling supply-and-discharge ports 67, and the inlet port 11B is provided so as to be offset with respect to the imaginary line L2 serving as a center line that passes through the centers of the respective second traveling supply-and-discharge ports 68.

A distance D1 between the pair of traveling supply-and-discharge ports 67 and 68 of the left-side traveling control valve 4 and the pair of traveling supply-and-discharge ports 67 and 68 of the right-side traveling control valve 5 is shorter than a diameter D2 of the inlet port 11. The distance D1 is a distance (the shortest distance) along the width direction, and is a distance between the counter bore portions of the first traveling supply-and-discharge ports 67 or the second traveling supply-and-discharge ports 68 that are arranged on the same side. The diameter D2 of the inlet port 11 is a diameter of the counter bore portion of the inlet port 11.

Therefore, in the predetermined direction view viewed along the predetermined direction orthogonal to the width direction (for example, in the lateral direction view S viewed along the lateral direction), the inlet ports 11 overlap with both of the pair of traveling supply-and-discharge ports 67 and 68 of the left-side traveling control valve 4 and the pair of traveling supply-and-discharge ports 67 and 68 of the right-side traveling control valve 5. In other words, when viewed along the longitudinal direction which is one direction orthogonal to the width direction, the inlet ports 11 do not overlap with the traveling supply-and-discharge ports 67 and 68, but the inlet ports 11 overlap with the traveling supply-and-discharge ports 67 and 68 when viewed along the predetermined direction which is the other direction orthogonal to the width direction. The inlet ports 11 may overlap, in the predetermined direction view, with at least one of the pair of traveling supply-and-discharge ports 67 and 68 of the left-side traveling control valve 4 or the pair of traveling supply-and-discharge ports 67 and 68 of the right-side traveling control valve 5.

Further, the inlet port 11A overlaps, in the width direction view W viewed along the width direction (the vertical direction in FIG. 1), with the respective first traveling supply-and-discharge ports 67 that are arranged on the same side in the left-side traveling control valve 4 and the right-side traveling control valve 5. The inlet port 11B overlaps, in the width direction view W, with the respective second traveling supply-and-discharge ports 68 that are arranged on the same side in the left-side traveling control valve 4 and the right-side traveling control valve 5. Therefore, the inlet ports 11A and 11B are provided so as to overlap individually, in the width direction view W, with both of the respective first traveling supply-and-discharge ports 67 that are arranged on the same side and the respective second traveling supply-and-discharge ports 68 that are arranged on the same side. The respective first traveling supply-and-discharge ports 67 that are arranged on the same side and the respective second traveling supply-and-discharge ports 68 that are arranged on the same side form two supply and discharge port rows.

In the inlet housing 1 in which the left-side traveling control valve 4 and the right-side traveling control valve 5 are incorporated inside, by providing the inlet ports 11 so as to be respectively offset with respect to the imaginary line L1 and the imaginary line L2 and making the distance D1 shorter than the diameter D2 of the inlet ports 11, it is possible to reduce a width of the housing as a whole and to achieve miniaturization thereof as compared with a case in which valve housings are respectively provided for left and right-side traveling motors separately from the inlet housing (in other words, a case in which the inlet portion 10, the left-side traveling control valve 4, and the right-side traveling control valve 5 are provided in separate housings and connected to each other instead of providing them in the single inlet housing 1). In addition, by providing such an integrated configuration, there is no need to seal mating surfaces formed between the inlet portion 10 and the left-side traveling control valve 4 and between the inlet portion 10 and the right-side traveling control valve 5.

When the inlet ports 11 are caused to be overlapped with the traveling supply-and-discharge ports 67 and 68 in the predetermined direction view or in the width direction view W, the counter bore portion corresponding to the portion of the inlet port 11A that opens at the upper surface of the inlet housing 1 may be caused to overlap with the counter bore portions correspondent to the portions of the respective first traveling supply-and-discharge ports 67 that open at the upper surface of the inlet housing 1 in the predetermined direction view or in the width direction view W. In other words, causing the inlet ports 11 to be overlapped with the traveling supply-and-discharge ports 67 and 68 in the predetermined direction view or in the width direction view W includes causing the counter bore portion of the inlet port 11A to be overlapped with the counter bore portions of the traveling supply-and-discharge ports 67 and 68 in the predetermined direction view or in the lateral direction view S. The inlet ports 11 may overlap with at least one of the respective first traveling supply-and-discharge ports 67 or the respective second traveling supply-and-discharge ports 68 in the width direction view W.

As shown in FIG. 3, the inlet housing 1 is formed with two inlet ports 11 and two internal flow passages 12. In addition, the inlet housing 1 has, inside thereof, the junction portion 13 where the two internal flow passages 12 merge. The two internal flow passages 12 are formed so as to be symmetrical to each other in the lateral direction about the junction portion 13. The internal flow passages 12 respectively extend from the corresponding inlet ports 11 toward the inside in the longitudinal direction, and then, extend toward the inside in the lateral direction so as to be connected to the junction portion 13. The junction portion 13 is formed inside the inlet housing 1, and allows the working oil flowing from the two inlet ports 11 via the two internal flow passages 12 to merge. The junction portion 13 is provided at the center of the inlet housing 1 and extends along the longitudinal direction.

The working oil flowing from the two internal flow passages 12 merges on the upstream side and flows toward the downstream side in the junction portion 13. In the junction portion 13, the working oil flowing from the two internal flow passages 12 immediately merges in the junction portion 13 without flowing through a control valve provided in the valve housing 2, the left-side traveling control valve 4, or the right-side traveling control valve 5. In other words, a control valve including the control valve provided in the valve housing 2, the left-side traveling control valve 4, or the right-side traveling control valve 5 is not involved in connection between the two internal flow passages 12 and the junction portion 13, and the two internal flow passages 12 and the junction portion 13 are configured so as to achieve a structure that allows constant communication therebetween.

In the inlet housing 1 configured as described above, the two inlet ports 11 are provided as divided ports formed by dividing a single inlet port into two. With such a configuration, the size of each of the inlet ports 11 can be made smaller compared to a case in which a single inlet port is formed, provided that a flow rate of the working oil is the same, and so, it is possible to further reduce the width of the housing.

Note that the number of the inlet port 11 may be one, or may be three or more. Even in this case, by providing the inlet ports 11 so as to be offset with respect to both the imaginary line L1 and the imaginary line L2 and making the distance D1 shorter than the diameter D2 of the inlet ports 11, it is possible to reduce the width of the housing as a whole.

The configurations, operations, and effects of the embodiment of the present invention will be collectively described below.

The inlet housing 1 is a housing to which the working oil serving as the working fluid is supplied from the pump 3 serving as the fluid pressure source, and the inlet housing 1 includes: the left-side traveling control valve 4 incorporated inside the inlet housing 1, the left-side traveling control valve 4 being configured to control the left-side traveling motor 8; the right-side traveling control valve 5 incorporated inside the inlet housing 1, the right-side traveling control valve 5 being configured to control the right-side traveling motor 9; the inlet port 11 communicated with the pump 3 by opening at the outer surface of the inlet housing 1; and the internal flow passage 12 communicated with the inlet port 11 and connected to the pump passage 80, the pump passage 80 being configured to guide the working oil to the left-side traveling control valve 4 and the right-side traveling control valve 5. The left-side traveling control valve 4 has the traveling supply-and-discharge ports 67 and 68 serving as the pair of left-side traveling supply-and-discharge ports, the pair of left-side traveling supply-and-discharge ports opening at the outer surface of the inlet housing 1 and being configured to supply and discharge the working fluid to and from the left-side traveling motor 8, and the right-side traveling control valve 5 has the traveling supply-and-discharge ports 67 and 68 serving as the pair of right-side traveling supply-and-discharge ports, the pair of right-side traveling supply-and-discharge ports opening at the outer surface of the inlet housing 1 and being configured to supply and discharge the working oil to and from the right-side traveling motor 9. The inlet port 11 and the internal flow passage 12 are provided between the left-side traveling control valve 4 and the right-side traveling control valve 5; the inlet port 11 is offset with respect to the imaginary line L1 passing through one supply and discharge port row configured by the respective first traveling supply-and-discharge ports 67 arranged on the same side in the left-side traveling control valve 4 and the right-side traveling control valve 5, and with respect to the imaginary line L2 passing through the other supply and discharge port row configured by the respective second traveling supply-and-discharge ports 68 arranged on the same side in the left-side traveling control valve 4 and the right-side traveling control valve 5; and the distance D1 between the pair of traveling supply-and-discharge ports 67 and 68 of the left-side traveling control valve 4 and the pair of traveling supply-and-discharge ports 67 and 68 of the right-side traveling control valve 5 is shorter than the diameter D2 of the inlet port 11.

According to this configuration, because the inlet port 11 and the internal flow passage 12 are provided between the left-side traveling control valve 4 and the right-side traveling control valve 5, it is possible to achieve equalization of the flow passage lengths from the inlet port 11 to each of the respective traveling supply-and-discharge ports 67 and 68 of the left-side traveling control valve 4 and the right-side traveling control valve 5, and thereby occurrence of the left-right traveling difference is suppressed. In addition, while incorporating the left-side traveling control valve 4 and the right-side traveling control valve 5 inside the inlet housing 1, the inlet port 11 is arranged so as to be deviated from both the first traveling supply-and-discharge port 67 and the second traveling supply-and-discharge port 68, which are arranged on the same side, and the distance D1 is made shorter than the diameter D2 of the inlet port 11, and so, it is possible to reduce the width of the housing as a whole and to achieve the miniaturization as compared with a case in which valve housings are provided for left and right-side traveling motors separately from the inlet housing.

Embodiments of this invention were described above, but the above embodiments are merely examples of applications of this invention, and the technical scope of this invention is not limited to the specific constitutions of the above embodiments.

This application claims priority based on Japanese Patent Application No.2023-185293 filed with the Japan Patent Office on October 30, 2023, the entire contents of which are incorporated into this specification.

## Claims

1. An inlet housing to which working fluid is supplied from a fluid pressure source, the inlet housing comprising:
a left-side traveling control valve incorporated inside the inlet housing, the left-side traveling control valve being configured to control a left-side traveling motor;
a right-side traveling control valve incorporated inside the inlet housing, the right-side traveling control valve being configured to control a right-side traveling motor;
an inlet port communicated with the fluid pressure source by opening at an outer surface of the inlet housing; and
an internal flow passage communicated with the inlet port and connected to a pump passage, the pump passage being configured to guide the working fluid to the left-side traveling control valve and the right-side traveling control valve, wherein
the left-side traveling control valve has a pair of left-side traveling supply-and-discharge ports, the pair of left-side traveling supply-and-discharge ports opening at the outer surface and being configured to supply and discharge the working fluid to and from the left-side traveling motor,
the right-side traveling control valve has a pair of right-side traveling supply-and-discharge ports, the pair of right-side traveling supply-and-discharge ports opening at the outer surface and being configured to supply and discharge the working fluid to and from the right-side traveling motor,
the inlet port and the internal flow passage are provided between the left-side traveling control valve and the right-side traveling control valve,
the inlet port is offset with respect to each of imaginary lines passing through two supply and discharge port rows configured by the left-side traveling supply-and-discharge ports and the right-side traveling supply-and-discharge ports arranged on the same side in the left-side traveling control valve and the right-side traveling control valve, and
a distance between the pair of left-side traveling supply-and-discharge ports and the pair of right-side traveling supply-and-discharge ports is shorter than a diameter of the inlet port.
